# EUROPEAN PATENT SPECIFICATION

(11) **EP 0 531 270 B1**
(45) Date of publication and mention of the grant of the patent: **24.07.1996**
(21) Application number: 92870124.2
(22) Date of filing: 17.08.1992
(51) Int. Cl.: C08F 10/00, C08F 4/627, C08F 4/626

(54) **Catalyst system for improved polymerization yield**
Katalysatorsystem zur Verbesserung der Polymerisationsausbeute
Système catalytique améliorant le rendement de polymérisation

(30) Priority: 03.09.1991 US 753592; 11.10.1991 US 776498
(43) Date of publication of application: 10.03.1993
(73) Proprietor: FINA TECHNOLOGY, INC., Dallas, Texas 75206 (US)
(72) Inventor: Shamshoum, Edward S., HoustonTexas 77062 (US); Rauscher, David, Webster,Texas 77598 (US); Malbari, Shabbir, Pasadena,Texas 77505 (US)
(74) Representative: Detrait, Jean-Claude

(56) References cited:
- EP-A- 0 164 789
- US-A- 4 342 855

## Description

FIELD OF THE INVENTION: This invention relates to a catalyst system, a process for making the catalyst system and a process for olefin polymerization using the catalyst system. More specifically, this invention relates to a catalyst system using a diethylaluminum alkoxide, such as diethylaluminum ethoxide, with an aluminum alkyl, such as triethylaluminum, as a cocatalyst mixture or to a catalyst system using an alcohol, such as methanol or ethanol, and an aluminun alkyl, such as triethylaluminum, so that the alcohol and the aluminum alkyl react to form an alkoxide; to a process for making the catalyst system; and to a polymerization of olefins, specifically propylene, using the catalyst system which increases polymerization yield.

DESCRIPTION OF THE PRIOR ART: Diethylaluminum ethoxide (DEAI-E) is known as a co-catalyst. U.S. Patent 4,335,016 discloses a new catalyst activated with a cocatalyst of an organometallic compound or hydrogen or mixtures thereof, such as alkyl lithium, alkyl magnesium, alkyl aluminum, alkyl aluminum halide or alkyl zinc. Diethylaluminum ethoxide is listed as an example of a cocatalyst but the working examples of the patent used triisobutylaluminum as the cocatalyst. There is no disclosure that a mixture of DEAI-E with any other cocatalyst would result in an increase in polymerization yield.

US Patent 4,342,855 discloses a process for the production of polyethylene, characterized in that the polymerization reaction is carried out in the presence of an alcohol and in the presence of a catalyst prepared from :
(a) a solid catalyst component containing at least titanium, magnesium and chlorine,
(b) trialkylaluminum of the following general formula : 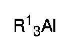 wherein R¹ represents an alkyl or cycloalkyl group containing from 1 to 12 carbon atoms; and
(c) a chlorine-containing aluminum compound of the following general formula : 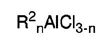 wherein R² represents an alkyl or cycloalkyl group containing from 1 to 12 carbon atoms, and n is a real number of from 1 to 2.

U.S. Patent 4,985,515 discloses a combination of triethyl aluminum (TEAI) and diethylaluminum ethoxide (DEAI-E) as a co-catalyst for catalyst for the polymerization of olefins. Several other combinations of organoaluminum compounds as co-catalysts are also disclosed without showing any superior results of one combination over the others.

U.S. Patent 4,399,055 discloses a combination of triethylaluminum, diethylaluminum ethoxide and diethylaluminum chloride (DEAC). Other combinations are also disclosed including triethylaluminum and diethylaluminum ethoxide but no comparison of the effect of using different combinations of co-catalyst on polymerization yield is reported. The working examples reported use the TEAI/DEAI-E/DEAC combination.

The patents above and others of the prior art are concerned with the ratio of co-catalyst to Ziegler-Natta type catalyst component rather than a mixture of co-catalysts which affects polymerization yield. It would be advantageous to provide a mixture of co-catalysts which would improve polymerization yield.

Alcohols are known catalyst deactivators. U.S. Patent No. 4,567,155 discloses the use of alcohol as a catalyst deactivation agent to treat the dry polymer powder from a gas-phase reactor. A gas-stream of nitrogen containing alcohol flows over the dry powder to deactivate the catalyst residues remaining in the polymer powder.

A complex of a transition metal compound, a non-metallic oxygen-containing component and a non-reducing zinc alkylating agent is disclosed in U.S. Patent 4,396,748 to improve catalyst activity and to eliminate the catalyst residue removal step. The non-metallic oxygen-containing component is alcohol. The catalyst residue removal step consists of treating the polymer with alcohol. This patent discloses that the addition of small amounts of alcohol followed by diethylzinc leads to an increase in catalyst activity Relative large amount of alcohol resulted in decreased catalyst activity

Alcohols, specifically methanol, and other Lewis base impurities occur in commercially available propylene. When propylene is used in polymerization, these catalyst poisons reduce catalyst efficiency and polymerization yield. It would be advantageous to define an amount of alcohols which would not reduce and, ideally, increase catalyst efficiency and polymerization yield.

### SUMMARY OF THE INVENTION

Accordingly, an object of this invention is to provide a mixture of co-catalysts to improve polymerization yield, a catalyst system which reduces cost by increasing catalyst mileage and a catalyst system which decreases the residual catalyst content (ash) of the polymer.

These and other objects are accomplished by a catalyst system which comprises:
a) a transition metal compound of the general formula MRₓ where M is a Group IVB, VB or VIB metal, R is a halogen or a hydrocarboxyl and x is the valence of the metal;
b) an aluminum alkyl of the general formula AIR'₃ where R' is an alkyl of from 1-8 carbon atoms and R' may be the same or different;and
c) diethylaluminum alkoxide where the alkoxide has 1-4 carbon atoms;

wherein the mole-to-mole ratio of diethylaluminum alkoxide to aluminum alkyl ranges from 0.05 to 0.2.

Accordingly, an object of this invention is to provide a catalyst system and processes for making and using the catalyst system in which alcohol is added in a certain amount to increase catalyst efficiency and polymerization yield.

These and other objects are accomplished by a catalyst system comprising:
a) a transition metal compound of the general formula MRₓ where M is a Group IVB, VB or VIB metal, R is a halogen or a hydrocarboxyl and x is the valence of the metal;
b) an aluminum alkyl of the general formula AIR'₃ where R' is an alkyl of from 1-8 carbon atoms and R' may be the same or different;and
c) a normal alcohol of the general formula CₙH₂ₙ₊₁OH where n is an integer from 1 to 4;

wherein the mole-to-mole ratio of alcohol to aluminum alkyl ranges from about 0.03 to about 0.25; but excluding a chlorine-containing aluminium compound of the following general formula: R²ₙAlCl₃₋ₙ wherein R² represents an alkyl or cycloalkyl group containing from 1 to 12 carbon atoms, and n is a real number of from 1 to 2.

### BRIEF DESCRIPTION OF THE DRAWINGS

A more complete appreciation of the invention and many of the attendant advantages thereof will be readily understood by reference to the following detailed description when considered in connection with the accompanying drawings wherein:
Figure 1 is a graph of DEAI-E/AI molar ratio versus catalyst mileage.
Figure 2 is a graph of alcohol/TEAI molar ratio versus catalyst mileage.

### DETAILED DESCRIPTION OF THE INVENTION

This invention is useful for polymerization utilizing any Ziegler-Natta type catalyst. The catalyst is generally composed of a transition metal compound and an aluminum alkyl. Optionally, an electron donor may be added. The transition metal compound is preferably of the general formula MRₓ where M is the metal, R is a halogen or a hydrocarboxyl and x is the valence of the metal. Preferably, M is a Group IVB, VB or VIB metal, more preferably a Group IVB, and most preferably titanium. Preferably, R is chlorine, bromine, an alkoxy or a phenoxy, more preferably chlorine or ethoxy and most preferably, chlorine. Illustrative examples of the transition metal compound catalyst components are TiCl₄, TiBr₄, Ti(OC₂H₅)₃CI, Ti(OC₂H₅)Cl₃, Ti(OC₄H₉)₃CI, Ti(OC₃H₇)₂CI₂, Ti(OC₆H₁₃)₂Cl₂, Ti(OC₂H₅)₂Br₂ and Ti(OC₁₂H₂₅)Cl₃. Mixtures of the transition metal compounds may be used. No restriction on the number of transition metal compounds is made as long as at least one transition metal compound is present.

The aluminum alkyl is of the general formula AIR'₃ where R' is an alkyl of from 1-8 carbon atoms and R' may be the same or different. Examples of aluminum alkyls are trimethyl aluminum (TMA), triethyl aluminum (TEAI) and triisobutyl aluminum (TiBAI). The preferred aluminum alkyl is TEAI. Furthermore, combinations of aluminum alkyls are effective.

Typically, an electron donor is an organosilicon compound. Examples of electron donors are cyclohexylmethyldimethoxy silane (CMDS), methylcyclohexyldimethyoxysilane (MCMS), diphenyldimethoxy silane (DPMS) and isobutyltrimethoxy silane (IBMS). Other examples of electron donors are disclosed in U.S. Patent Nos. 4,218,339; 4,395,360; 4,328,122; 4,473,660; 4,562,173 and 4,547,552, which are hereby incorporated by reference.

One method to use the catalyst system of this invention is to mix the aluminum alkyl with a Ziegler-Natta type catalyst. An electron donor may be optionally added. The diethyl aluminum alkoxide is mixed with an olefin. The cata- lyst/aluminum alkyl/electron donor is added to the olefin/diethylaluminum alkoxide and brought to polymerization conditions. Another method is to mix the diethylaluminum alkoxide with the aluminum alkyl, add diethylaluminum alkox- ide/aluminum alkyl mixture to a Ziegler-Natta type catalyst and, optionally, an electron donor. This mixture is then mixed with an olefin and brought to polymerization conditions. The diethylaluminum alkoxide and aluminum alkyl are present such that the mole-to-mole ratio of diethylaluminum alkoxide to aluminum alkyl ranges from 0.05 to 0.2.

The diethylaluminum alkoxide is preferably diethylaluminum methoxide, diethylaluminum ethoxide, diethylaluminum propoxide or diethylaluminum butoxide, and, most preferably, diethylaluminum ethoxide (DEAL-E).

Without limiting the scope of the claims, the mechanism of the diethylaluminum alkoxide in increasing polymerization yield is believed to be that an aluminum alkoxide, such as diethylaluminum ethoxide, interacts with the transition metal and converts inactive sites to sites active for olefin polymerization. It is believed that the oxygen in the diethylaluminum alkoxide bonds with the transition metal and the subsequent reduction of the transition metal by alkyl aluminum transforms an inactive transition metal site to an active one. Activating these sites results in an increased yield of stereoregular or crystalline polymer.

The catalyst system can also be produced by adding a normal alcohol of the general formula CnH2n-,10H where n is an integer from 1 to 4 to a Ziegler-Natta type catalyst system. The alcohol is added to the olefin. The alcohol/olefin mixture is added to a reactor. A Ziegler-Natta type catalyst is mixed with a aluminum alkyl co-catalyst. An electron donor may be optionally added. The catalyst/co-catalyst/electron donor mixture is added to the reactor. The amount of the aluminum alkyl is such that the mole-to-mole ratio of alcohol to aluminum alkyl ranges from 0.03 to 0.25.

Without limiting the scope of the claims, the mechanism of the alcohol in increasing polymerization yield is believed to be that alcohol and alkylaluminum form aluminum alkoxides which interact with the transition metal and convert inactive sites to sites active for olefin polymerization. Activating these sites results in an increased yield of stereoregular or crystalline polymer. If this is correct, any material which would react with alkyl aluminum to produce aluminum alkoxides would be effective in this invention.

The mechanism described above appears to be effective to a mole to mole ratio of alcohol to aluminum of up to approximately 0.25. The inactive sites are gradually changed to active sites and the active sites are not affected. At mole-to-mole ratios of greater than 0.25, alcohol becomes a poison for the active isospecific catalytic sites as well.

The catalyst system is useful in the polymerization of olefins, preferably a-olefins and, most preferably, propylene. Polymerization is effected by making the catalyst system and bringing it in contact with the olefin monomer in a reaction zone under polymerization conditions. Prepolymerization of the catalyst system can be achieved by contacting the transition metal compound with a small amount of the aluminum alkyl and an olefin monomer prior to introduction to the reaction zone at a temperature below that of the polymerization conditions.

The invention having been generally described, the following examples are given as particular embodiments of the invention and to demonstrate the practice and advantages thereof. It is understood that the examples are given by way of illustration and are not intended to limit the specification or the claims to follow in any manner.

### EXAMPLE 1

2.0 mmol of TEAI were placed in a stainless steel bomb with 10 mg of catalyst and 0.02 mmol of CMDS. 1.0 liter of propylene was placed in a 2 liter Zipperclave reactor at 60°C. Contents of the bomb were charged to the reactor with 0.4 liter of propylene. Polymerization continued for one hour during which time the reactor was maintained at the polymerization temperature (60°C). At the end of this time polymerization was terminated by rapidly venting the reactor of unreacted monomer. The polymer yield and catalyst mileage are shown in Table I.

### EXAMPLE 2

1.9 mmol of TEAI and 0.1 mmol of DEAI-E were placed in a stainless steel bomb with 10 mg of catalyst and 0.02 mmol of CMDS. 1.0 liter of propylene was placed in a 2 liter Zipperclave reactor at 60°C. Contents of the bomb were charged to the reactor with 0.4 liter of propylene. Polymerization continued for one hour during which time the reactor was maintained at the polymerization temperature (60°C). At the end of this time polymerization was terminated by rapidly venting the reactor of unreacted monomer. The polymer yield and catalyst mileage are shown in Table I.

### EXAMPLE 3

The procedure of Example 2 was followed except that 1.8 mmol of TEAI and 0.2 mmol of DEAI-E were used. The polymer yield and catalyst mileage are shown in Table I.

### EXAMPLE 4

The procedure of Example 2 was followed except that 1.7 mmol of TEAI and 0.3 mmol of DEAI-E were used. The polymer yield and catalyst mileage are shown in Table I.

### EXAMPLE 5

The procedure of Example 2 was followed except that 1.5 mmol of TEAI and 0.5 mmol of DEAI-E were used. The polymer yield and catalyst mileage are shown in Table I.

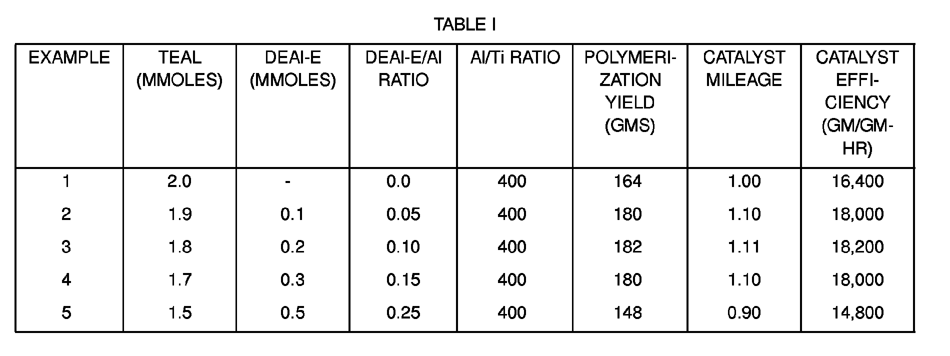

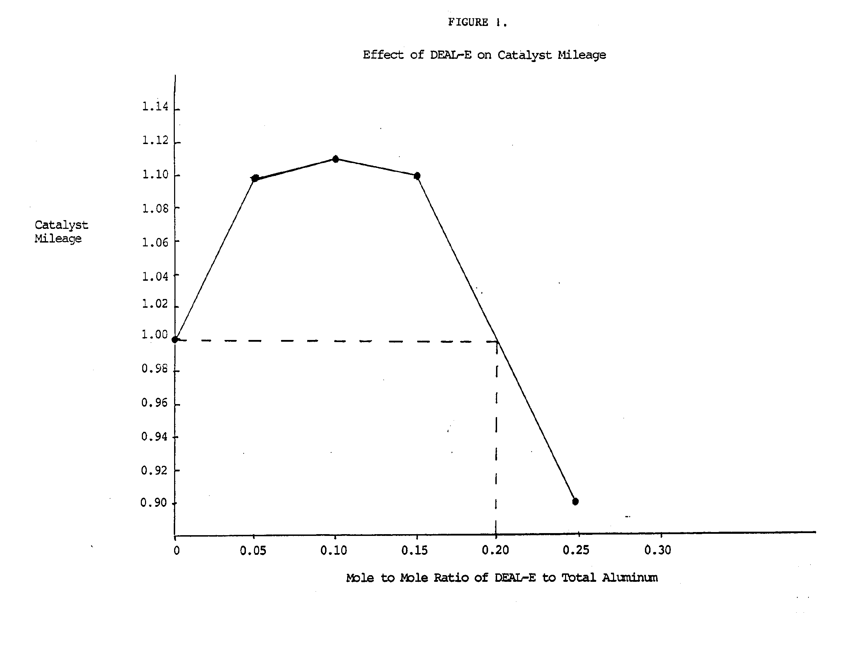

The results of Examples 1-5 are shown in Figure 1 as the mole-to-mole ratio of DEAI-E to Al versus catalyst mileage. Catalyst mileage is obtained by dividing the polymer yield of any example by the polymer yield for the example which did not use DEAL-E (Example 1). This would mean that Example 1 would have a catalyst mileage of 1.00 and the others would be greater or less than 1.00 depending on whether the polymer yield is greater or less than the polymer yield for Example 1. Catalyst mileage is a convenient method to express a better or worse case than a base case.

This data shows that when the DEAI-E/AI ratio is as small as about 0.05 polymerization yield is increased by using a DEAI-E/TEAI co-catalyst instead of TEAI alone. Preferably, the DEAL-E/AI ratio ranges from about 0.05 to about 0.20 and, most preferably, is 0.10.

It is believed that a mole-to-mole ratio of diethylaluminum alkoxide to total aluminum from about 0.05 to about 0.20 would result in an increase in polymerization yield for any aluminum/transition metal ratio commonly used for the polymerization of olefins. Typically, the aluminum/transition metal ratio for the polymerization of olefins ranges from about 100 to about 500. Preferably, the alkyl aluminum/transition metal ratios for the present invention is 350-450 and, most preferably, is 400. Preferably, the mole-to-mole ratio of diethylaluminum alkoxide to total aluminum is 0.10.

### EXAMPLE 6

1.0 liter of propylene was placed in a 2 liter Zipperclave reactor at room temperature. 0.04 mmol of methanol were added to the propylene. The contents of the reactor were mixed and heated to 60°C. 2.0 mmol of TEAI were mixed with 10 mg of catalyst and 0.02 mmol of CMDS in a stainless steel bomb. The contents of the bomb were charged to the reactor with 0.4 liter of propylene. Polymerization continued for one hour during which time the reactor was maintained at the polymerization temperature (60°C). At the end of this time polymerization was terminated by rapidly venting the reactor of unreacted monomer. The polymer yield and analysis and catalyst mileage are shown in Table II.

### EXAMPLE 7

The procedure of Example 6 was followed except that 0.13 mmol of methanol were used. The polymer yield and analysis and catalyst mileage are shown in Table II.

### EXAMPLE 8

The procedure of Example 6 was followed except that 0.2 mmol of methanol were used. The polymer yield and analysis and catalyst mileage are shown in Table II.

### EXAMPLE 9

The procedure of Example 6 was followed except that 0.25 mmol of methanol were used. The polymer yield and analysis and catalyst mileage are shown in Table II.

### EXAMPLE 10

The procedure of Example 6 was followed except that 0.5 mmol of methanol were used. The polymer yield and analysis is shown in Table II.

### EXAMPLE 11

The procedure of Example 6 was followed except that 1.0 mmol of methanol were used. The polymer yield and analysis and catalyst mileage are shown in Table II.

### EXAMPLE 12

The procedure of Example 6 was followed except that 1.3 mmol of methanol were used. The polymer yield and analysis and catalyst mileage are shown in Table II.

### EXAMPLE 13

The procedure of Example 6 was followed except that 0.1 mmol of ethanol were used. The polymer yield and analysis and catalyst mileage are shown in Table II.

### EXAMPLE 14

The procedure of Example 6 was followed except that 0.2 mmol of ethanol were used. The polymer yield and analysis and catalyst mileage are shown in Table II.

### EXAMPLE 15

The procedure of Example 6 was followed except that 0.5 mmol of ethanol were used. The polymer yield and analysis and catalyst mileage are shown in Table II.

### EXAMPLE 16

The procedure of Example 6 was followed except that 0.2 mmol of isopropanol were used. The polymer yield and analysis and catalyst mileage are shown in Table II.

### EXAMPLE 17

The procedure of Example 6 was followed except that 0.3 mmol of isopropanol were used. The polymer yield and analysis and catalyst mileage are shown in Table II.

### EXAMPLE 18

The procedure of Example 6 was followed except that 0.5 mmol of isopropanol were used. The polymer yield and analysis and catalyst mileage are shown in Table II.

### EXAMPLE 19

The procedure of Example 6 was followed except that 1.0 mmol of isopropanol were used. The polymer yield and analysis and catalyst mileage are shown in Table II.

### EXAMPLE 20

The procedure of Example 6 was followed except that 1.3 mmol of isopropanol were used. The polymer yield and analysis and catalyst mileage are shown in Table II.

### Example 21

The procedure of Example 6 was followed except that 2.0 mmol of isopropanol were used. The polymer yield and analysis and catalyst mileage are shown in Table II.

### COMPARATIVE EXAMPLE

1.0 liter of propylene was placed in a 2 liter Zipperclave reactor at room temperature. The contents of the reactor were heated to 60°C. 2.0 mmol of TEAI were mixed with 10 mg of catalyst and 0.02 mmol of CMDS in a stainless steel bomb. The contents of the bomb were charged to the reactor with 0.4 liter of propylene. Polymerization continued for one hour during which time the reactor was maintained at the polymerization temperature (60°C). At the end of this time polymerization was terminated by rapidly venting the reactor of unreacted monomer. The polymer yield and analysis and catalyst mileage are shown in Table II.

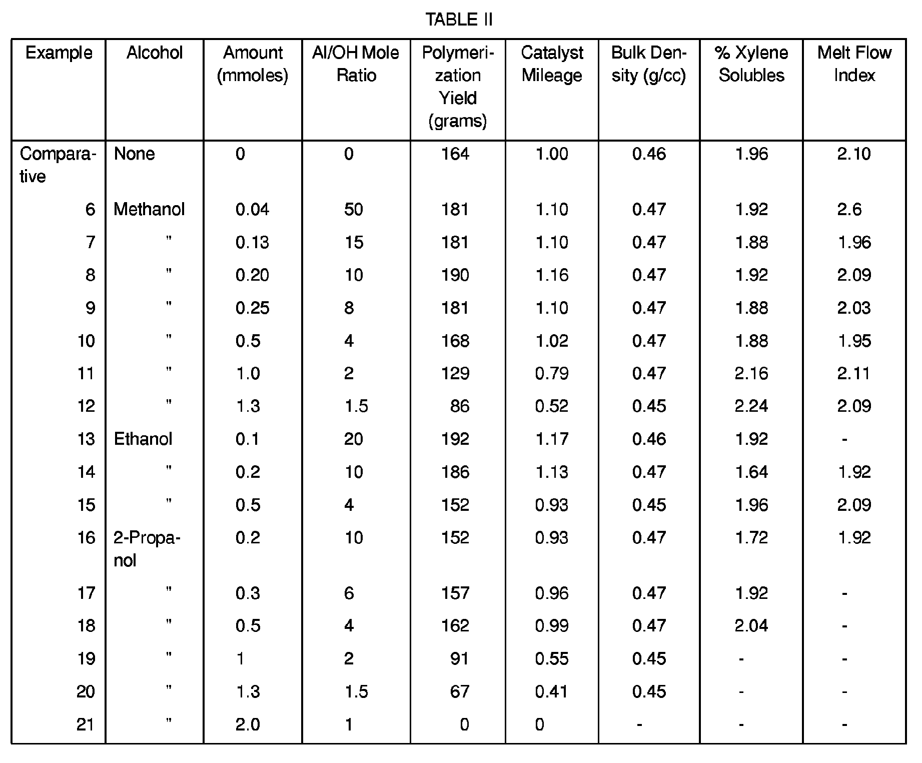

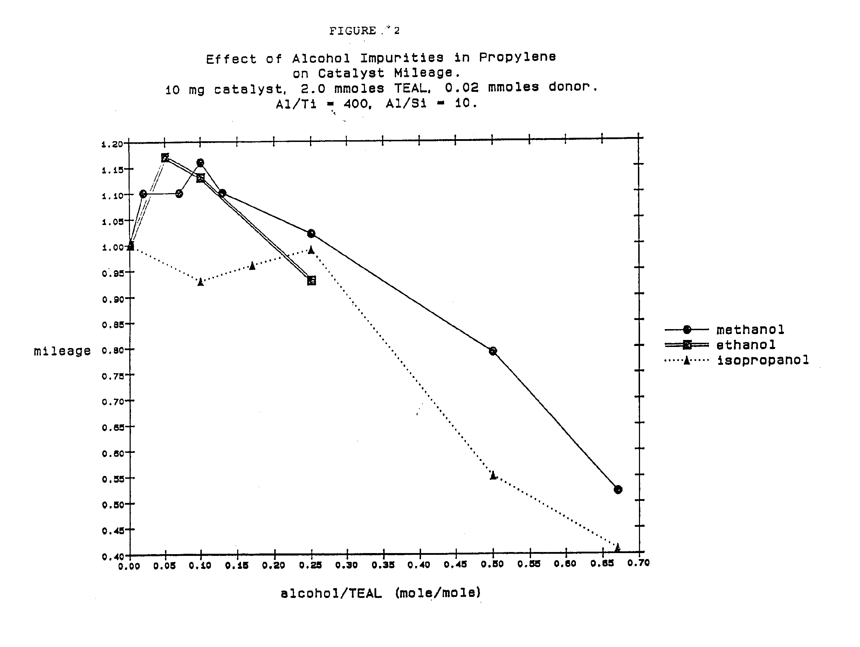

The results are also shown in Figure 2 as the mole-to-mole ratio of alcohol to TEAI versus catalyst mileage (catalyst efficiency). The efficiency of the catalyst with no alcohol added is taken as 1.00. Whether the catalyst efficiency is greater than one or less than one represents an increase or decrease, respectively, in polymerization yield.

As shown in Table II the normal or linear chain alcohols, methanol and ethanol, seem to have a positive effect whereas the branched alcohol appears to have no positive effect. The normal alcohols in small amounts have a positive effect up to about 0.25 alcohol/TEAI molar ratio. As little as 0.03 would appear to have a positive effect.

Obviously, numerous modifications and variations of the present invention are possible in light of the above teachings. It is therefore to be understood that within the scope of the appended claims, the invention may be practiced otherwise than as specifically described herein.

## Claims

1. A catalyst system comprising:
a) a transition metal compound of the general formula MRx where M is a Group IVB, VB or VIB metal, R is a halogen or a hydrocarboxyl and x is the valence of the metal;
b) an aluminum alkyl of the general formula AIR'₃ where R' is an alkyl of from 1-8 carbon atoms and R' may be the same or different; and either
c1) diethylaluminum alkoxide where the alkoxide has from 1-4 carbon atoms;
wherein the mole-to-mole ratio of diethylaluminum alkoxide to total aluminum ranges from about 0.05 to about 0.20; wherein the mole-to-mole ratio of total aluminum to transition metal ranges from about 100 to about 500; or
c2) a normal alcohol of the general formula CₙH₂ₙ₊₁OH where n is an integer from 1 to 4; wherein the mole-to-mole ratio of alcohol to aluminum alkyl ranges from about 0.03 to about 0.25; but excluding a chlorine-containing aluminum compound of the following general formula : R²ₙAlCl₃₋ₙ wherein R² represents an alkyl or cycloalkyl group containing from 1 to 12 carbon atoms, and n is a real number of from 1 to 2.

2. A catalyst system as recited in claim 1, consisting of
(a) a transition metal compound of the general formula MRₓ;
(b) an aluminium alkyl of the general formula AIR'₃; and either
(c1) diethylaluminum alkoxide; or
(c2) a normal alcohol of the general formula CₙH₂ₙ₊₁OH.

3. A catalyst system as recited in either of claims 1 and 2 wherein the catalyst system additionally comprises an organosilicon compound as an electron donor.

4. A catalyst system as recited in Claim 3 wherein the electron donor is methylcyclohexyldimethoxysilane, diphenyldimethoxy silane, isobutyltrimethoxy silane or cyclohexylmethyldimethoxy silane.

5. A catalyst system as recited in Claim 4 wherein the electron donor is methylcyclohexyldimethyoxysilane or cyclohexylmethyldimethoxy silane.

6. A catalyst system as recited in any one of the preceding claims wherein M is a Group IVB metal.

7. A catalyst system as recited in Claim 6 wherein M is titanium.

8. A catalyst system as recited in any one of the preceding claims wherein R is chlorine, bromine, an alkoxy or a phenoxy.

9. A catalyst system as recited in Claim 8 wherein R is chlorine or ethoxy.

10. A catalyst system as recited in Claim 9 wherein R is chlorine.

11. A catalyst system as recited in any one of the preceding claims wherein MRₓ is TiC1₄, TiBr₄, Ti(OC₂H₅)₃Cl, Ti(OC₂H₅)Cl₃, Ti(OC₄H₉)₃Cl, Ti(OC₃H₇)₂Cl₂, Ti(OC₆H₁₃)₂Cl₂, Ti(OC₂H₅)₂Br₂, Ti(OC₁₂H₂₅)Cl₃ or mixtures thereof.

12. A catalyst system as recited in any one of the preceding claims wherein the aluminum alkyl is trimethyl aluminum, triethyl aluminum, triisobutyl aluminum or combinations thereof.

13. A catalyst system as recited in Claim 12 wherein the aluminum alkyl is triethyl aluminum.

14. A catalyst system as recited in any one of Claims 2 to 13, consisting of
a) a transition metal compound of the general formula MRx where M is a Group IVB, VB or VIB metal, R is a halogen or a hydrocarboxyl and x is the valence of the metal;
b) an aluminum alkyl of the general formula AIR'₃ where R' is an alkyl of from 1-8 carbon atoms and R' may be the same or different; and
c) diethylaluminum alkoxide where the alkoxide has from 1-4 carbon atoms;
wherein the mole-to-mole ratio of diethylaluminum alkoxide to total aluminum ranges from about 0.05 to about 0.20;
wherein the mole-to-mole ratio of total aluminum to transition metal ranges from about 100 to about 500.

15. A catalyst system as recited in Claim 14 wherein the diethyl aluminum alkoxide is diethylaluminum ethoxide.

16. A catalyst system as recited in either of Claims 14 and 15 wherein the mole-to-mole ratio of total aluminum to transition metal ranges from about 350 to about 450.

17. A catalyst system as recited in Claim 16 wherein the mole-to-mole ratio of total aluminum to transition metal is about 400.

18. A catalyst system as recited in any one of Claims 14 to 17 wherein the mole-to-mole ratio of diethylaluminum alkoxide to total aluminum is about 0.10.

19. A catalyst system as recited in any one of Claims 2 to 13, consisting of
a) a transition metal compound of the general formula MRₓ where M is a Group IVB, VB or VIB metal, R is a halogen or a hydrocarboxyl and x is the valence of the metal;
b) an aluminum alkyl of the general formula AIR'₃ where R' is an alkyl of from 1-8 carbon atoms and R' may be the same or different; and
c) a normal alcohol of the general formula CₙH₂ₙ₊₁OH where n is an integer from 1 to 4; wherein the mole-to-mole ratio of alcohol to aluminum alkyl ranges from about 0.03 to about 0.25.

20. A catalyst system as recited in Claim 19 wherein the alcohol is chosen from the group consisting of methanol and ethanol.

21. A process for making a catalyst system comprising:
a) mixing an aluminum alkyl of the general formula AIR'₃ where R' is an alkyl of from 1-8 carbon atoms and R' may be the same or different with a Ziegler-Natta type catalyst having a transition metal compound of the general formula MRₓ where M is a Group IVB, VB or VIB metal, R is a halogen or a hydrocarboxyl and x is the valence of the metal;
b) adding diethylaluminum alkoxide to an olefin; and
c) adding the aluminum alkyl/catalyst to the diethylaluminum alkoxide/olefin;
wherein the mole-to-mole ratio of diethylaluminum alkoxide to total aluminum ranges from about 0.05 to about 0.20; wherein the mole-to-mole ratio of total aluminum to transition metal ranges from about 100 to about 500.

22. A process as recited in Claim 21 wherein the aluminum alkyl is triethyl aluminum.

23. A process as recited in either of Claims 21 and 22 wherein the diethylaluminum alkoxide is diethylaluminum ethoxide.

24. A process as recited in any one of Claims 21 to 23 wherein the mole-to-mole ratio of total aluminum to transition metal ranges from about 350 to about 450.

25. A process as recited in Claim 24 wherein the mole-to-mole ratio of total aluminum to transition metal is about 400.

26. A process as recited in any one of Claims 21 to 25 wherein the mole-to-mole ratio of diethylaluminum alkoxide to total aluminum is about 0.10.

27. A process for making a catalyst system comprising:
a) mixing an aluminum alkyl of the general formula AIR'₃ where R' is an alkyl of from 1-8 carbon atoms and R' may be the same or different with a Ziegler-Natta type catalyst having a transition metal compound of the general formula MRₓ where M is a Group IVB, VB or VIB metal, R is a halogen or a hydrocarboxyl and x is the valence of the metal;
b) adding the aluminum alkyl/catalyst mixture to a normal alcohol of the general formula CₙH₂ₙ₊₁OH where n is an integer from 1 to 4 such that the mole-to-mole ratio of alcohol to aluminum alkyl ranges from about 0.03 to about 0.25.

28. A process as recited in Claim 27 wherein the alcohol is chosen from the group consisting of methanol and ethanol.

29. A process for polymerizing olefins comprising:
a) making a catalyst system according to any one of claims 1 to 20;
b) bringing the catalyst system in contact with an olefin monomer in a reaction zone under polymerization conditions.

30. A process as recited in Claim 29 wherein the process additionally comprises prepolymerization of the catalyst system by contacting the transition metal compound with a small amount of the aluminum alkyl and an olefin monomer prior to introduction to the reaction zone at a temperature below that of the polymerization conditions.

## Patentansprüche

1. Katalysatorsystem umfassend:
a) eine Übergangsmetallverbindung der allgemeinen Formel MR_{X}, wobei M ein Metall der Gruppen IVB, VB oder VIB ist, R ein Halogen oder ein Hydrocarboxyl ist und x die Valenz des Metalls ist;
b) ein Aluminiumalkyl der allgemeinen Formel AIR'₃, wobei R' ein Alkyl mit von 1-8 Kohlenstoffatomen ist und R' gleich oder verschieden sein kann; und entweder
c1) Diethylaluminiumalkoxid, wobei das Alkoxid von 1-4 Kohlenstoffatome aufweist;
wobei das mol-zu-mol Verhältnis von Diethylaluminiumalkoxid zur Gesamtmenge an Aluminium in dem Bereich von etwa 0,05 bis etwa 0,20 liegt;
wobei das mol-zu-mol Verhältnis der Gesamtmenge an Aluminium zum Übergangsmetall in dem Bereich von etwa 100 bis etwa 500 liegt; oder
c2) einen normalen Alkohol der allgemeinen Formel CₙH₂ₙ₊₁OH, wobei n eine ganze Zahl von 1 bis 4 ist;
wobei das mol-zu-mol Verhältnis von Alkohol zu Aluminiumalkyl in dem Bereich von etwa 0,03 bis etwa 0,25 liegt;
aber außer einer chlorhaltigen Aluminiumverbindung der folgenden allgemeinen Formel: R²ₙAICI_{3-n'} wobei R² eine Alkyl- oder Cycloalkylgruppe mit von 1 bis 12 Kohlenstoffatomen darstellt und n eine reelle Zahl von 1 bis 2 ist.

2. Katalysatorsystem nach Anspruch 1, bestehend aus
(a) einer Übergangsmetallverbindung der allgemeinen Formel MRₓ;
(b) einem Aluminiumalkyl der allgemeinen Formel AIR'₃; und entweder
(c1) Diethylaluminiumoxid; oder
(c2) einem normalen Alkohol der allgemeinen Formei CₙH₂ₙ₊₁OH.

3. Katalysatorsystem nach einem der Ansprüche 1 und 2, wobei das Katalysatorsystem zusätzlich eine Organosiliziumverbindung als einen Elektronendonor umfaßt.

4. Katalysatorsystem nach Anspruch 3, wobei der Elektronendonor Methylcyclohexyldimethoxysilan, Diphenyldimethoxysilan oder Isobutyltrimethoxysilan ist.

5. Katalysatorsystem nach Anspruch 4, wobei der Elektronendonor Methylcyclohexyldimethoxysilan ist.

6. Katalysatorsystem nach einem der vorstehenden Ansprüche, wobei M ein Metall der Gruppe IVB ist.

7. Katalysatorsystem nach Anspruch 6, wobei M Titan ist.

8. Katalysatorsystem nach einem der vorstehenden Ansprüche, wobei R Chlor, Brom, ein Alkoxy oder ein Phenoxy ist.

9. Katalysatorsystem nach Anspruch 8, wobei R Chlor oder Ethoxy ist.

10. Katalysatorsystem nach Anspruch 9, wobei R Chlor ist.

11. Katalysatorsystem nach einem der vorstehenden Ansprüche, wobei MRₓ TiC1₄, TiBr₄, Ti(OC₂H₅)₃CI, Ti(OC₂H₅)Cl₃, Ti(OC₄H₉)₃Cl, Ti(OC₃H₇)₂Cl₂, Ti(OC₆H₁₃)₂Cl₂, Ti(OC₂H₅)₂Br₂, Ti(OC₁₂H₂₅)CI₃ oder Gemische davon darstellt.

12. Katalysatorsystem nach einem der vorstehenden Ansprüche, wobei das Aluminiumalkyl Trimethylaluminium, Triethylaluminium, Triisobutylaluminium oder Kombinationen davon darstellt.

13. Katalysatorsystem nach Anspruch 12, wobei das Aluminiumalkyl Triethylaluminium ist.

14. Katalysatorsystem nach einem der Ansprüche 2 bis 13, bestehend aus:
a) einer Übergangsmetallverbindung der allgemeinen Formel MR_{x'} wobei M ein Metall der Gruppen IVB, VB oder VIB ist, R ein Halogen oder ein Hydrocarboxyl ist und x die Valenz des Metalls ist;
b) einem Aluminiumalkyl der allgemeinen Formel AIR'₃, wobei R' ein Alkyl mit von 1-8 Kohlenstoffatomen ist und R' gleich oder verschieden sein kann; und
c) Diethylaluminiumalkoxid, wobei das Alkoxid von 1-4 Kohlenstoffatome aufweist;
wobei das mol-zu-mol Verhältnis von Diethylaluminiumalkoxid zur Gesamtmenge an Aluminium in dem Bereich von etwa 0,05 bis etwa 0,20 liegt;
wobei das mol-zu-mol Verhältnis der Gesamtmenge an Aluminium zum Übergangsmetall in dem Bereich von etwa 100 bis etwa 500 liegt.

15. Katalysatorsystem nach Anspruch 14, wobei das Diethylaluminiumalkoxid Diethylaluminiumethoxid ist.

16. Katalysatorsystem nach einem der Ansprüche 14 und 15, wobei das mol-zu-mol Verhältnis der Gesamtmenge an Aluminium zum Übergangsmetall in dem Bereich von etwa 350 bis etwa 450 liegt.

17. Katalysatorsystem nach Anspruch 16, wobei das mol-zu-mol Verhältnis der Gesamtmenge an Aluminium zum Übergangsmetall etwa 400 beträgt.

18. Katalysatorsystem nach einem der Ansprüche 14 bis 17, wobei das mol-zu-mol Verhältnis von Diethylaluminiumalkoxid zur Gesamtmenge an Aluminium etwa 0,10 beträgt.

19. Katalysatorsystem nach einem der Ansprüche 2 bis 13, bestehend aus:
a) einer Übergangsmetallverbindung der allgemeinen Formel MRₓ, wobei M ein Metall der Gruppen IVB, VB oder VIB ist, R ein Halogen oder ein Hydrocarboxyl ist und x die Valenz des Metalls ist;
b) einem Aluminiumalkyl der allgemeinen Formel AIR'₃, wobei R' ein Alkyl mit von 1-8 Kohlenstoffatomen ist und R' gleich oder verschieden sein kann; und
c) einem normalen Alkohol der allgemeinen Formel CₙH₂ₙ₊₁OH, wobei n eine ganze Zahl von 1 bis 4 ist;
wobei das mol-zu-mol Verhältnis von Alkohol zu Aluminiumalkyl in dem Bereich von etwa 0,03 bis etwa 0,25 liegt.

20. Katalysatorsystem nach Anspruch 19, wobei der Alkohol aus der Gruppe ausgewählt wird, die aus Methanol und Ethanol besteht.

21. Verfahren zur Herstellung eines Katalysatorsystems, umfassend:
a) Mischen eines Aluminiumalkyls der allgemeinen Formel AIR'₃, wobei R' ein Alkyl mit von 1-8 Kohlenstoffatomen ist und R' gleich oder verschieden sein kann, mit einem Katalysator vom Ziegler-Natta Typ mit einer Übergangsmetallverbindung der allgemeinen Formel MRₓ, wobei M ein Metall der Gruppen IVB, VB oder VIB ist, R ein Halogen oder ein Hydrocarboxyl ist und x die Valenz des Metalls ist;
b) Zugeben von Diethylaluminiumalkoxid zu einem Olefin; und
c) Zugeben des Aluminiumalkyl/Katalysators zu dem Diethylaluminiumalkoxid/Olefin;
wobei das mol-zu-mol Verhältnis von Diethylaluminiumalkoxid zur Gesamtmenge an Aluminium in dem Bereich von etwa 0,05 bis etwa 0,20 liegt;
wobei das mol-zu-mol Verhältnis der Gesamtmenge an Aluminium zum Übergangsmetall in dem Bereich von etwa 100 bis etwa 500 liegt.

22. Verfahren nach Anspruch 21, wobei das Aluminiumalkyl Triethylaluminium ist.

23. Verfahren nach einem der Ansprüche 21 und 22, wobei das Diethylaluminiumalkoxid Diethylaluminiumethoxid ist.

24. Verfahren nach einem der Ansprüch 21 bis 23, wobei das mol-zu-mol Verhältnis der Gesamtmenge an Aluminium zum Übergangsmetall in dem Bereich von etwa 350 bis etwa 450 liegt.

25. Verfahren nach Anspruch 24, wobei das mol-zu-mol Verhältnis der Gesamtmenge an Aluminium zum Übergangsmetall etwa 400 beträgt.

26. Verfahren nach einem der Ansprüche 21 bis 25, wobei das mol-zu-mol Verhältnis von Diethylaluminiumalkoxid zur Gesamtmenge an Aluminium etwa 0,10 beträgt.

27. Verfahren zur Herstellung eines Katalysatorsystems, umfassend:
a) Mischen eines Aluminiumalkyls der allgemeinen Formel AIR'₃, wobei R' ein Alkyl mit von 1-8 Kohlenstoffatomen ist und R' gleich oder verschieden sein kann mit einem Katalysator vom Ziegler-Natta Typ mit einer Übergangsmetallverbindung der allgemeinen Formel MR_{X}, wobei M ein Metall der Gruppen IVB, VB oder VIB ist, R ein Halogen oder Hydrocarboxyl ist und x die Valenz des Metalls ist;
b) Zugeben des Aluminiumalkyl/Katalysatorgemisches zu einem normalen Alkohol der allgemeinen Formel CₙH₂ₙ₊₁OH, wobei n eine ganze Zahl von 1 bis 4 ist, so daß das mol-zu-mol Verhältnis von Alkohol zu Aluminiumalkyl in dem Bereich von etwa 0,03 bis etwa 0,25 liegt.

28. Verfahren nach Anspruch 27, wobei der Alkohol aus der Gruppe ausgewählt wird , die aus Methanol und Ethanol besteht.

29. Verfahren zur Polymerisation von Olefinen, umfassend:
a) Herstellen eines Katalysatorsystems nach einem der Ansprüche 1 bis 20;
b) Inkontaktbringen des Katalysatorsystems mit einem Olefinmonomer in einer Reaktionszone unter Polymerisationsbedingungen.

30. Verfahren nach Anspruch 29, wobei das Verfahren zusätzlich die Prepolymerisation des Katalysatorsystems durch Inkontaktbringen der Übergangsmetallverbindung mit einer geringen Menge des Aluminiumalkyls und eines Olefinmonomers vor Einführung in die Reaktionszone bei einer Temperatur unterhalb der der Polymerisationbedingungen umfaßt.

## Revendications

1. Un système catalytique comprenant:
a) un composé métal de transition de formule générale Mr où M est un métal du Groupe IVB, VB ou VIB, R est un halogène ou un hydrocarboxyl et x est la valence du métal;
b) un alkyl aluminium de formule générale AIR'3 où R' est alkyl comprenant de 1 à 8 atomes de carbone et R' peut être le même ou différent; et aussi
c1) le diethylaluminium alkoxyde où l'alkoxyde possède 1 à 4 atomes de carbone;
où le rapport mole-mole de diethylaluminium alkoxyde et d'aluminium total se situe entre environ 0.05 et environ 0.2.
où le rapport mole-mole d'aluminium total et de métal de transition se situe entre environ 100 et environ 500.
c2) un alcool normal de formule générale CₙH₂ₙ₊₁ où n est un entier compris entre 1 et 4;
où le rapport mole-mole d'alcool et d'alkyl aluminium se situe entre environ 0.03 et environ 0.25; mais excluant les composés aluminium contenant du chlore dont la formule générale est la suivante: R²AlCl₃₋ ₙ ou R² représente un groupe alkyl ou cycloalkyl contenant de 1 à 12 atomes de carbone, et n est un nombre réel compris entre 1 et 2.

2. Un système catalytique comme décrit dans la revendication 1 consistant en
a) un composé métal de transition de formule générale Mrₓ;
b) un alkyl aluminium de formule générale AIR'₃; et aussi
c1) le diethylaluminium alkoxyde;
c2) un alcool normal de formule générale CₙH₂ₙ₊₁.

3. Un système catalytique comme décrit dans les revendications 1 et 2 où le système catalytique comprend en plus un composé organo-silicium comme donneur d'électrons.

4. Un système catalytique comme décrit dans la revendication 3 où le donneur d'électrons est le methylcyclohexyldi- methyldimethoxy silane, diphényldimethoxy silane ou l'isobutyltrimethoxy silane.

5. Un système catalytique comme décrit dans la revendication 4 où le donneur d'électrons est le méthylcyclohexyldi- methyoxysilane.

6. Un système catalytique comme décrit dans n'importe quelle des revendications qui précèdent où M est métal du groupe IVB

7. Un système catalytique comme décrit dans la revendication 6 où M est le titane.

8. Un système catalytique comme décrit dans n'importe quelle des revendications qui précèdent où R est le chlore, le brome, un alkoxy ou un phénoxy.

9. Un système catalytique comme décrit dans la revendication 8 où R est le chlore ou l'éthoxy.

10. Un système catalytique comme décrit dans la revendication 9 où R est le chlore.

11. Un système catalytique comme décrit dans n'importe quelle des revendications qui précèdent où Mr_{X} est TiCl4, TiBr4, Ti(OC₂H₅)₃Cl, Ti(OC₂H₅)Cl₃, Ti(OC₄H₉)₃CI, Ti(OC₃H₇)₂Cl₂, Ti(OC₆H₁₃)₂Cl₂, Ti(OC₂H₅)₂Br₂ et Ti(OC₁₂H₂₅)CI₃ ou leurs mélanges.

12. Un système catalytique comme décrit dans n'importe quelle des revendications qui précèdent où l'alkyl aluminium est le triméthyl aluminium, le triethylaluminium, le triisobutyl aluminium ou leurs combinaisons.

13. Un système catalytique comme décrit dans la revendication 12 où l'alkyl aluminium est le triethyl aluminium.

14. Un système catalytique comme décrit dans n'importe quelle des revendications de 2 à 13 consistant en
a) un composé métal de transition de formule générale Mrₓ où M est un métal du Groupe IVB, VB ou VIB, R est un halogène ou un hydrocarboxyl et x est la valence du métal;
b) un alkyl aluminium de formule générale AIR'₃ où R' est un alkyl comprenant de 1 à 8 atomes de carbone et R' peut être le même ou différent; et aussi
c) le diethylaluminium alkoxyde où l'alkoxyde possède 1 à 4 atomes de carbone;
où le rapport mole-mole de diethylaluminium alkoxyde et d'aluminium total se situe entre environ 0.05 et environ 0.2.
où le rapport mole-mole d'aluminium total et de métal de transition se situe entre environ 100 et environ 500.

15. Un système catalytique comme décrit dans la revendication 14 où le diethyl aluminium alkoxyde est le diethyl aluminium ethoxyde.

16. Un système catalytique comme décrit dans les revendications 14 et 15 où le rapport mole à mole de l'aluminium total et du métal de transition se situe entre environ 350 et environ 450.

17. Un système catalytique comme décrit dans la revendication 16 où le rapport mole à mole de l'aluminium total et du métal de transition est d'environ 400.

18. Un système catalytique comme décrit dans n'importe quelle des revendications de 14 à 17 où le rapport mole à mole de diethyl aluminium alkoxyde et d'aluminium total est d'environ 0.10.

19. Un système catalytique comme décrit dans n'importe quelle des revendications de 2 à 13 consistant en
a) un composé métal de transition de formule générale Mr où M est un métal du Groupe IVB, VB ou VIB, R est un halogène ou un hydrocarboxyl et x est la valence du métal;
b) un alkyl aluminium de formule générale AIR'₃ où R' est un alkyl comprenant de 1 à 8 atomes de carbone et R' peut être le même ou différent; et
c) un alcool normal de formule générale CₙH₂ₙ₊₁ où n est un entier compris entre 1 et 4; où le rapport mole-mole d'alcool et d'alkyl aluminium se situe entre environ 0.03 et environ 0.25;

20. Un système catalytique comme décrit dans la revendication 19 où l'alcool est choisi entre le méthanol et l'éthanol.

21. Un procédé de fabrication du système catalytique comprenant:
a) le mélange d'un alkyl aluminium de formule générale AIR'₃ où R' est un alkyl comprenant de 1 à 8 atomes de carbone et R' peut être le même ou différent avec un catalyseur de type Ziegler-Natta possédant un composé métal de transition de formule générale Mr où M est un métal du Groupe IVB, VB ou VIB, R est un halogène ou un hydrocarboxyl et x est la valence du métal;
b) l'addition de diethylaluminium alkoxyde à une oléfine; et
c) l'addition d'alkyl aluminium/catalyseur au diéthylaluminium alkoxyde/oléfine;
où le rapport mole-mole de diethylaluminium alkoxyde et d'aluminium total se situe entre environ 0.05 et environ 0.2.
où le rapport mole-mole d'aluminium total et de métal de transition se situe entre environ 100 et environ 500.

22. Un procédé comme décrit dans la revendication 21 où l'alkyl aluminium est le triethyl aluminium.

23. Un procédé comme décrit dans les revendications 21 et 22 où le diethylaluminium alkoxyde est le diethylaluminium ethoxyde.

24. Un procédé comme décrit dans n'importe quelle des revendications 21 à 23 où le rapport mole à mole d'aluminium total et de métal de transition se situe entre environ 350 et environ 450.

25. Un procédé comme décrit dans la revendication 24 où le rapport mole à mode d'aluminium total et de métal de transition est d'environ 400.

26. Un procédé comme décrit dans n'importe quelle des revendications 21 à 23 où le rapport mode à mode de diethylaluminium alkoxyde et d'aluminium total est d'environ 0.10.

27. Un procédé de fabrication du système catalytique comprenant:
a) le mélange d'un alkyl aluminium de formule générale AIR'₃ ou R' est un alkyl comprenant de 1 à 8 atomes de carbone et R' peut être le même ou différent avec un catalyseur de type Ziegler-Natta possédant un composé métal de transition de formule générale Mr où M est un métal du Groupe IVB, VB ou VIB, R est un halogène ou un hydrocarboxyl et x est la valence du métal;
b) l'addition du mélange alkyl aluminium/catalyseur à un alcool normal de formule générale CₙH₂ₙ₊₁ où n est un entier compris entre 1 et 4 de sorte que le rapport mole-mole d'alcool et d'alkyl aluminium se situe entre environ 0.03 et environ 0.25;

28. Un procédé comme décrit dans la revendication 27 où l'alcool est le méthanol ou l'éthanol.

29. Un procédé pour polymériser les oléfines comprenant:
a) la fabrication d'un système catalytique en accord avec n'importe quelle des revendications 1 à 20;
b) la mise en contact du système catalytique et de l'oléfine monomère dans une zone de réaction sous des conditions de polymérisation.

30. Un procédé comme décrit dans la revendication 29 où le procédé comprend en plus une prépolymérisation du système catalytique en mettant en contact le composé métal de transition avec une petite quantité de l'alkyl aluminium et une oléfine monomère avant l'introduction dans la zone de réaction et à une température en dessous de celle des conditions de polymérisation.
